# EUROPÄISCHE PATENTSCHRIFT

(11) **EP 0 886 800 B1**
(45) Veröffentlichungstag und Bekanntmachung des Hinweises auf die Patenterteilung: **25.07.2001**
(21) Anmeldenummer: 97915290.7
(22) Anmeldetag: 13.02.1997
(51) Int. Cl.: G02B 6/38

(54) **SPLEISSGERÄT ZUM VERSCHWEISSEN ZWEIER LICHTWELLENLEITER**
SPLICING DEVICE FOR BONDING TWO OPTICAL WAVE GUIDES
DISPOSITIF D'EPISSAGE POUR SOUDER DEUX GUIDES D'ONDES OPTIQUES

(30) Priorität: 14.03.1996 DE 19610062
(43) Veröffentlichungstag der Anmeldung: 30.12.1998
(73) Patentinhaber: SIEMENS AKTIENGESELLSCHAFT, 80333 München (DE)
(72) Erfinder: BRUGGER, Rudolf, D-82178 Puchheim (DE); KRAUSE, Dieter, D-82294 Spielberg (DE); ISLINGER, Jürgen, D-86343 Königsbrunn (DE)
(86) Internationale Anmeldenummer: DE9700282
(87) Internationale Veröffentlichungsnummer: WO9734178

(56) Entgegenhaltungen:
- EP-A- 0 536 072
- US-A- 4 598 974
- US-A- 4 775 327
- PATENT ABSTRACTS OF JAPAN vol. 005, no. 185 (P-091), 25.November 1981 & JP 56 113112 A (TOSHIBA CORP), 5.September 1981,
- PATENT ABSTRACTS OF JAPAN vol. 008, no. 214 (P-304), 29.September 1984 & JP 59 097109 A (TOSHIBA KK), 4.Juni 1984,

## Beschreibung

Die Erfindung bezieht sich auf ein Spleißgerät zum Verschweißen zweier Lichtwellenleiter. Zum lösbaren Verbinden von Lichtwellenleitern werden Lichtwellenleiterstecker verwendet, in deren hohlzylindrische aus Keramik bestehende Steckerteile die zu koppelnden Glasfasern möglichst zentrisch eingeklebt werden sollen. Dabei ist es bekannt, kurze Glasfaserstücke in die zu koppelnden Endbereiche der Steckerteile bereits vorher einzukleben und die weiterführenden Lichtwellenleiter innerhalb dieser Steckerteile mit Hilfe einer Immersionsflüssigkeit anzukoppeln. Dem Vorteil einer exakten Zentrierung der Glasfasern im Koppelbereich steht hier jedoch der Nachteil einer hohen Dämpfung der Koppelstellen innerhalb der Steckerteile gegenüber. Außerdem besteht die Gefahr des Austrocknens der Immersionflüssigkeit. Auch das Einbringen von Verunreinigungen in den Koppelbereich läßt sich beim Einschieben der Lichtwellenleiter in die zugeordneten Steckerteile kaum vermeiden.

In der älteren Patentanmeldung mit dem Aktenzeichen 195 07 885.3 wurde eine Spleißeinrichtung zum Verschweißen von Lichtwellenleiter in oder dicht an optischen Bauelementen, insbesondere Lichtwellenleitersteckern vorgeschlagen, mit welcher beispielsweise in keramische Steckerteile eingeklebte Glasfasern in den Steckerteilen an weiterführende Lichtwellenleiter angeschweißt werden können. Das Steckerteil wird in einer festen Aufnahmeeinrichtung fixiert. Die weiterführende Glasfaser wird auf einer Zustelleinrichtung fixiert und in das mit einem Einlauftrichter versehene Steckerteil eingeschoben.

Der in das Steckerteil einzuschiebende Abschnitt der Glasfaser muß dabei freiragend gehalten werden. Lichtwellenleiter werden aber in gewickeltem Zustand angeliefert und haben daher eine Eigenkrümmung, durch die das freie Ende der Glasfaser außerhalb des Fangbereichs der Einlauföffnung im Steckerteil liegen kann. Aus diesem Grunde muß der Einführvorgang in jedem Falle überwacht werden und gegebenenfalls muß die Glasfaser von Hand ausgerichtet werden.

Der Erfindung liegt die Aufgabe zugrunde, eine Einrichtung zu schafffen, die es ermöglicht, die Glasfaser ohne Sichtkontrolle und sicher in das Steckerteil einzuführen.

Diese Aufgabe wird durch die Erfindung gemäß Anspruch 1 gelöst.

In der Ausgangsstellung ist die Zentrieröffnung der Zentrierblende weit geöffnet, so daß die Glasfaser auch bei maximaler Achsabweichung sicher in die Zentrieröffnung eingeführt werden kann. Beim Vorschieben der Zustelleinrichtung wird die teleskopgelagerte Zentrierblende zunächst mitgeführt. Bereits kurz nach Beginn dieser Bewegung wird dabei die Zentrieröffnung so stark verengt, daß die Lageabweichung der einliegenden Glasfaser auf ein Maß verringert wird, daß ein sicheres Einführen in das Steckerteil ermöglicht. Eine optische Überwachung und Nachkorrektur ist dabei nicht mehr nötig.

Vorteilhafte Weiterbildungen der Erfindung sind in den Ansprüchen 2 bis 4 gekennzeichnet:

Durch die Weiterbildung nach Anspruch 2 ist es möglich, einen Lichtleiter mit einem Kabelmantel zu versehen, aus dem nur ein kurzes Faserstück frei herausragt, das in eine genaue Zentrierbohrung des Steckerteils eingeschoben werden kann. Der Kabelmantel kann in eine erweiterte Aufnahmeöffnung des Steckerteils eingeführt werden. Dabei muß jedoch die Zentrieröffnung soweit aufgeweitet werden, daß der Kabelmantel hindurchtreten kann.

Durch die Weiterbildung nach Anspruch 3 wird eine einfache Zentriereinrichtung geschaffen, bei der der Steuerantrieb einfach und kostengünstig ausgebildet ist und eine hohe Funktionssicherheit aufweist.

Durch die Weiterbildung nach Anspruch 4 wird die Zentrieröffnung durch einfache Kerben gebildet, die sich je nach Öffnungsgrad mehr oder weniger überdecken.

Im folgenden wird die Erfindung anhand eines in der Zeichnung dargestellten Ausführungsbeispieles näher erläutert.

Es zeigen:
- Figur 1: eine seitliche Teilansicht mit einer teilweisen Schnittdarstellung eines Spleißgerätes mit einem Steckerstift und einem Lichtwellenleiter in der Ausgangsstellung,
- Figur 2: eine andere Seitenansicht einer Zentrierblende des Schweißgerätes nach Figur 1,
- Figur 3,4: die Teile nach den Figuren 1 und 2 in einer Zwischenstellung beim Einführen des Lichtwellenleiters in den Steckerstift,
- Figur 5,6: Die Teile nach den Figuren 1 und 2 in der Endstellung nach dem Einführen des Lichtwellenleiters.

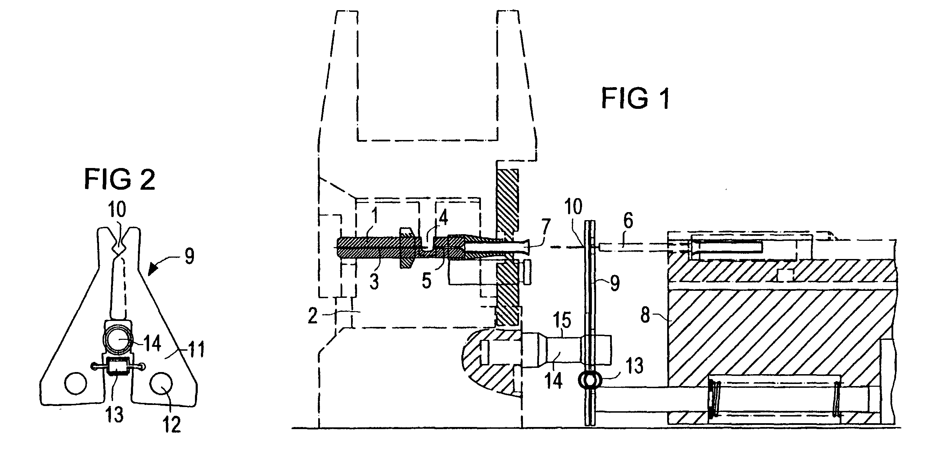

Nach den Figuren 1 und 2 ist ein Steckerstift 1 in einer festen Aufnahmeeinrichtung 2 eines Spleißgeräts zum Verschweißen zweier Lichtwellenleiter fixiert. In den Steckerstift ist ein Faserstück eines ersten Lichtwellenleiters 3 eingeklebt und reicht von seinem zu koppelnden Stirnende bis in die Mitte einer als Quernut ausgebildeten Freimachung 4 im Stekkerstift 1. Der Steckerstift weist in der Fortsetzung des ersten Lichtwellenleiters 3 eine Zentrierbohrung 5 für einen zweiten Lichtwellenleiter 6 auf, der durch eine Einführöffnung 7 des Steckerstifts 1 bis in die Freimachung 4 hinein einschiebbar ist.

Der zweite Lichtwellenleiter 6 ist auf einer Zustelleinrichtung 8 koaxial zum Steckerstift 1 fixiert. Die Zustelleinrichtung 8 ist in der Längsrichtung des Lichtwellenleiters 6 verschiebbar gelagert. Sie trägt eine Zentrierblende 9 mit einer Zentrieröffnung 10, durch die der freiragende Abschnitt des Lichtwellenleiters 6 hindurchragt. Die Zentrierblende besteht aus zwei sich teilweise überlappenden Lamellen 11, die auf der Zentrieröffnung 10 gegenüberliegenden Seite auf Achsen 12 schwenkbar gelagert sind. Die beiden Lamellen 11 werden durch eine Spannfeder 13 gegen einen Kulissenstift 14 gedrückt, der von der festen Aufnahmeeinrichtung 2 in die Richtung der Zustelleinrichtung 8 parallel zum Lichtleiter 6 absteht und zwischen die beiden Lamellen 11 ragt.

Die teleskopartig an der Zustelleinrichtung 8 gelagerte Zentrierblende 9 wird beim Vorschieben der Zustelleinrichtung 8 in Richtung der festen Aufnahmeeinrichtung 2 zunächst mitgeführt. In der Ausgangsstellung liegen die beiden Lamellen am verdickten äußeren Ende des Kulissenstifts 14 an, wobei die Zentrieröffnung 10 soweit geöffnet ist, daß der Lichtwellenleiter 6 mühelos eingeschoben werden kann.

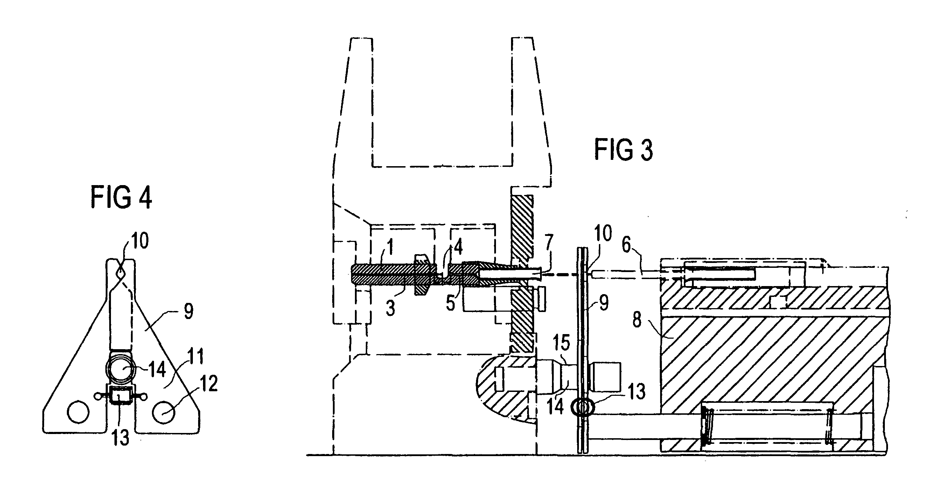

Nach den Figuren 2 und 3 ist die Zustelleinrichtung 8 bereits soweit in die Richtung des Steckerstifts 1 verschoben, daß das Faserende des Lichtwellenleiters 6 gerade in die Einführöffnung 7 des Steckerstifts 1 eintritt. Der Abstand zwischen den beiden Lamellen 11 ist verringert und die Zentrieröffnung 10 verengt. Das Faserende des Lichtwellenleiters 6 ist nun so genau geführt, daß es sicher die Einführöffnung 7 des Stekkerstifts 1 trifft und mühelos in diesen hineingeschoben werden kann.

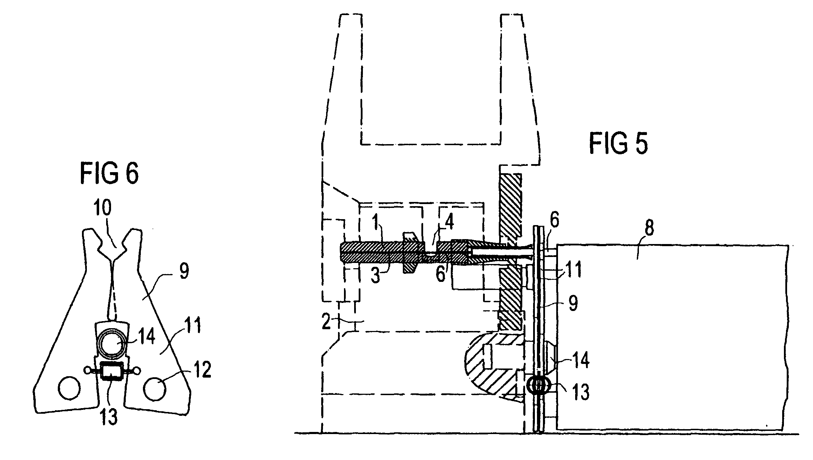

Nach den Figuren 5 und 6 ist die Zustelleinrichtung 8 soweit vorgeschoben, daß sich die Enden der beiden Lichtwellenleiter 3, 6 im Bereich der Freimachung 4 berühren. Die Zentrierblende ist dabei gegen einen Anschlag 16 der festen Aufnahmeeinrichtung 2 gestoßen. Die teleskopartige Lagerung der Zentrierblende 9 ermöglicht es, das die Zuführeinrichtung 8 nach dem Erreichen des Anschlags weiter vorgefahren werden kann. Die Zentrierblende befindet sich nun in einem Bereich des Kulissenstifts 14, in dem dieser einen erweiterten Durchmesser aufweist, durch den sich die Zentrieröffnung 10 auf eine Weite vergrößert, die ein problemloses Hindurchschieben eines Kabelmantels des Lichtwellenleiters 6 ermöglicht.

## Patentansprüche

1. Schweißgerät zum Verschweißen zweier Lichtwellenleiter (3, 6) wobei ein Faserstück eines ersten Lichtwellenleiter (6) in einem z.B. als Steckerstift (1) ausgebildeten optischen Bauelements fixiert ist, das eine Zentrieröffnung (5) mit einer erweiterten Einführöffnung (7) für ein anzuspleißendes Faserende eines zweiten Lichtwellenleiters (6) aufweist, wobei das Bauelement im Bereich der Spleißstelle eine Freimachung (4) für den Lichtbogen zwischen zwei Schweißelektroden aufweist,
wobei das optische Bauelement in einer im wesentlichen feststehenden Aufnahmeeinrichtung (2) des Spleißgeräts fixierbar ist,
wobei der zweite Lichtwellenleiter (6) an einer in der Faserrichtung verschiebbaren Zustelleinrichtung (8) koaxial zum ersten Lichtwellenleiter (3) fixierbar ist und
wobei ein in das optische Bauelement eintauchender Endabschnitt des zweiten Lichtwellenleiters (6) an der Zustelleinrichtung (8) freiragend gehalten ist,
**dadurch gekennzeichnet,**
daß an der Zustelleinrichtung (8) eine Zentrierblende (9) mit einer verstellbaren Zentrieröffnung (10) für das freiragende Ende des zweiten Lichtwellenleiters (6) vorgesehen ist, daß die Zentrierblende an der Zustelleinrichtung (8) in der Zustellrichtung teleskopartig gelagert ist,
daß sich die Zentrieröffnung (10) zu Beginn der Zustellbewegung im Bereich des freien Stirnendes des zweiten Lichtwellenleiters (6) befindet und
daß die Weite der Zentrieröffnung (10) mittels eines Steuerantriebs (z.B. 14) beim Verschieben der Zustelleinrichtung (8) gegen das optische Bauelement (z.B. 1) verringerbar ist.

2. Spleißgerät nach Anspruch 1,
**dadurch gekennzeichnet,**
daß die Weite der Zentrieröffnung (10) nach dem Eintauchen des Faserendes in die Einlauföffnung (7) des optischen Bauelements (z.B. 1) vergrößerbar ist.

3. Spleißgerät nach Anspruch 1 oder 2,
**dadurch gekennzeichnet,**
daß die Zentrierblende (9) aus zwei flachen, schwenkbar gelagerten, sich teilweise überlappenden Lamellen (11) gebildet ist, die mittels einer Spannfeder (14) zusammengedrückt sind, daß der Steuerantrieb einen Kulissenstift (14) aufweist, der an der festen Aufnahmeeinrichtung (2) für das optische Bauelement (z.B. 1) befestigt ist und in die Zustellrichtung zwischen die beiden Lamellen (11) ragt,
daß die Anschlagflächen der Lamellen (11) durch die Spannfeder (13) gegen den Kulissenstift gedrückt sind und
daß der Kulissenstift (14) im Bewegungsbereich der Blende (9) eine Führungskontur aufweist, die die Verengung bzw. Erweiterung der Zentrieröffnung (10) steuert.

4. Spleißgerät nach Anspruch 1, 2 oder 3,
**dadurch gekennze1chnet,**
daß die Zentrieröffnung (10) zwischen zwei Einkerbungen in den Lamellen (9) gebildet ist.

## Claims

1. Welding appliance for welding two optical waveguides (3, 6) with a fibre piece of a first optical waveguide (6) being fixed in an optical component which is, for example, in the form of a plug pin (1) and has a centring opening (5) with an enlarged insertion opening (7) for a fibre end of a second optical waveguide (6) which is to be spliced on,
with the component having a cutout (4) in the region of the splice point for the arc between two welding electrodes,
in which case the optical component can be fixed in an essentially stationary holding device (2) of the splicing appliance,
in which case the second optical waveguide (6) can be fixed coaxially with respect to the first optical waveguide (3) on a feed device (8) which can be moved in the fibre direction, and
in which case an end section, which enters the optical component, of the second optical waveguide (6) is held such that it projects freely on the feed device (8),
characterized
in that a centring panel (9) having an adjustable centring opening (10) for the freely projecting end of the second optical waveguide (6) is provided on the feed device (8),
in that the centring panel is mounted telescopically in the feed direction on the feed device (8),
in that the centring opening (10) is located in the region of the free end face of the second optical waveguide (6) at the start of the feed movement, and
in that the width of the centring opening (10) can be reduced by means of a control drive (for example 14) by moving the feed device (8) with respect to the optical component (for example 1).

2. Splicing appliance according to Claim 1,
characterized
in that the width of the centring opening (10) can be enlarged once the fibre end has entered the inlet opening (7) for the optical component (for example 1).

3. Splicing appliance according to Claim 1 or 2, characterized
in that the centring panel (9) is formed from two flat partially overlapping sheets (11) which are mounted such that they can pivot and are pressed together by means of a clamping spring (14),
in that the control drive has a guide pin (14) which is attached to the fixed holding device (2) for the optical component (for example 1) and projects in the feed direction between the two sheets (11),
in that the stop surfaces of the sheets (11) are pressed against the guide pin by the clamping spring (13), and
in that the guide pin (14) has a guide contour, which controls the restriction and expansion of the centring opening (10), in the movement region of the panel (9).

4. Splicing appliance according to Claim 1, 2 or 3,
characterized
in that the centring opening (10) is formed between two notches in the sheets (9).

## Revendications

1. Appareil à épisser pour souder l'un à l'autre deux guides d'ondes optiques (3, 6), un morceau de fibre d'un premier guide d'ondes optiques (6) étant fixé dans un composant optique conçu, par exemple, sous forme de broche de connecteur (1), composant qui comporte une ouverture de centrage (5) avec une ouverture élargie d'introduction (7) pour une extrémité de la fibre, que l'on veut épisser, d'un deuxième guide d'ondes optiques (6),
le composant comportant, dans la zone de l'épissure, un espace libre (4) pour l'arc électrique entre deux électrodes de soudage;
le composant optique pouvant être fixé dans un dispositif de positionnement 2, pour l'essentiel fixe, de l'appareil à épisser,
le deuxième guide d'ondes optiques (6) pouvant être fixé, dans le même axe que le premier guide d'ondes optiques (3), sur un dispositif d'approche (8), qui peut être déplacé dans le sens de la fibre, et
une section terminale, qui entre dans le composant optique, du deuxième guide d'ondes optiques (6) étant maintenue libre et dépassant du dispositif d'approche (8),
**caractérisé par le fait**
que, sur le dispositif d'approche (8), on a prévu un écran de centrage (9) avec une ouverture de centrage réglable (10) pour l'extrémité, qui dépasse librement, du deuxième guide d'ondes optiques (6),
que l'écran de centrage est monté sur le dispositif d'approche (8) d'une façon télescopique dans le sens de l'approche,
que l'ouverture de centrage (10) se trouve, au début du mouvement d'approche, dans la zone de l'extrémité libre de contact du deuxième guide d'ondes optiques (6) et
que le diamètre intérieur de l'ouverture de centrage (10) peut être réduit au moyen d'un entraînement de commande (par exemple, 14) lors du déplacement du dispositif d'approche (8) vers le composant optique (par exemple, 1).

2. Appareil à épisser selon la revendication 1
**caractérisé par le fait**
que le diamètre intérieur de l'ouverture de centrage (10) peut être augmenté après l'introduction de l'extrémité de la fibre dans l'ouverture d'introduction (7) du composant optique (par exemple, 1).

3. Appareil à épisser selon la revendication 1 ou 2
**caractérisé par le fait**
que l'écran de centrage (9) est formé par deux plaquettes (11) plates, montées d'une façon pivotante, qui se recouvrent partiellement et qui sont appliquées l'une contre l'autre par un ressort de rappel (14),
que l'entraînement de commande comporte une broche à coulisse (14), qui est fixée sur le dispositif fixe de positionnement (2) pour le composant optique (par exemple, 1) et qui dépasse entre les deux plaquettes (11) dans le sens de l'approche,
que les surfaces de butée des plaquettes (11) sont appliquées contre la broche à coulisse par le ressort de rappel (13) et
que la broche à coulisse (14) comporte, dans la zone de déplacement de l'écran (9), un contour de guidage qui commande le rétrécissement et l'élargissement de l'ouverture de centrage (10).

4. Appareil à épisser selon la revendication 1, 2 ou 3
**caractérisé par le fait**
que l'ouverture de centrage (10) est formée entre deux gorges dans les plaquettes (9).
